# FASCICULE DE BREVET EUROPEEN

(11) **EP 3 153 724 B1**
(45) Date de publication et mention de la délivrance du brevet: **23.01.2019**
(21) Numéro de dépôt: 16201008.6
(22) Date de dépôt: 14.11.2012
(51) Int. Cl.: F16B 33/00

(54) **SYSTÈME D'ASSEMBLAGE FILETÉ AUTOBLOQUANT**
SELBSTVERRIEGELNDES BEFESTIGUNGSSYSTEM MIT SCHRAUBGEWINDEN
SELF LOCKING THREADED FASTENER SYSTEM

(30) Priorité: 15.11.2011 CH 18222011
(43) Date de publication de la demande: 12.04.2017
(62) Demande divisionnaire de: 12790846.5
(73) Titulaire: Safelock SA, 2735 Malleray (CH)
(72) Inventeur: KAUFMANN, Beat, 2735 Malleray (CH)
(74) Mandataire: P&TS SA (AG, Ltd.)

(56) Documents cités:
- EP-A1- 0 327 829
- WO-A1-2008/014753

## Description

### Domaine technique

La présente invention concerne un système d'assemblage autobloquant du type vis/écrou pour vis de précision.

### Etat de la technique

La présente invention concerne un système d'assemblage de deux éléments, notamment l'assemblage d'un élément fileté avec un élément taraudé tel qu'un ensemble vis/écrou usuel. L'opération d'assemblage consiste à appliquer un couple de serrage sur la tête d'une tige filetée, ou vis, afin de la faire progresser dans un écrou au moyen d'un outil.

Lors de cette opération de serrage d'un ensemble vis/écrou conventionnel, l'effort de traction, ou de pression, n'est exercé que sur une portion du filet de la vis. La plus grande partie de l'effort de pression est en fait supportée par les deux premières spires du filet, les suivantes n'étant pratiquement pas ou peu sollicitées. Ce phénomène est dû au système normalisé du jeu de tolérances, qui prévoit suffisamment d'espace entre les flancs, afin de garantir l'assemblage des filets intérieurs et extérieurs. Ceci implique qu'après un certain nombre d'opérations de desserrage et de resserrage, les forces de serrage provoquent une déformation ponctuelle du filet. Par conséquent, lors d'un choc ou de vibrations répétées, l'assemblage n'est plus garanti sans l'apport d'un verrouillage complémentaire ou d'un adjuvant chimique.

En horlogerie, on emploie fréquemment des mouvements de montre qui comportent plusieurs vis dont le diamètre de la tige filetée est inférieur au millimètre. Ce type de vis peut également être utilisé dans l'habillage d'une montre ou d'autres parties telles que le bracelet, le fermoir, etc. Cependant la précision des filetages des vis et des écrous est souvent insuffisante et a pour conséquence un serrage insuffisant des vis qui ont alors tendance à se desserrer.

De même, lorsque les vis subissent des contraintes telles qu'un choc ou des vibrations, fréquents lors du porter de la montre, le maintien de l'assemblage vis/écrou devient insuffisant. Une opération supplémentaire de collage est alors nécessaire afin d'éviter le dévissage des vis. L'assemblage est alors bloqué et risque moins de se dévisser.

Cependant l'ajout de colle dans un mouvement présente des inconvénients majeurs. Premièrement, cette opération est très délicate et nécessite d'être effectuée par un opérateur expérimenté. Ceci engendre un coût et une perte de temps non négligeables dans le montage du mouvement.

D'autre part, lors de cette opération de collage, il arrive que des fragments de colle coulent par inadvertance sur d'autres parties du mouvement. Les conséquences d'un tel incident peuvent être dommageables puisque le mouvement peut être rendu inutilisable.

En outre, si une opération de dévissage s'avère nécessaire, la colle appliquée sur la vis doit être ôtée avant de pouvoir dévisser la vis et l'application de colle doit être répétée lors du remontage.

Des systèmes de vissage autobloquant sont connus dans l'art antérieur, mais le profil des filets requis nécessite une précision d'usinage très difficile à obtenir dans des petits modules. Par conséquent, ces vis autobloquantes existent uniquement dans des grands modules, par exemple des modules égaux ou supérieurs à 1.5 mm.

Le document WO2008/014753 décrit un système d'assemblage autobloquant pour visser des accessoires sur des objectifs d'appareils photo, ou pour le vissage de l'objectif sur le boîtier. Ce système n'est pas adapté à des tiges de petit diamètre.

Le document EP0327829 décrit une boîte de montre formée d'une partie interne en métal ou en plastique et d'une partie extérieure en métal emboitée par friction sur la partie interne. Des vis permettent de maintenir l'assemblage.

Le document US4023914 décrit un taraud pour réaliser un filetage autobloquant à l'intérieur d'un trou. Ce taraud n'est pas adapté à des filetages de très petits diamètres.

En outre, les systèmes autobloquants connus ne permettent pas de garantir un assemblage de précision avec la qualité requise dans le domaine de l'horlogerie, notamment par les normes de l'horlogerie suisse (NIHS) et les normes internes aux horlogers.

Actuellement, il n'est pas connu de système d'assemblage vis/écrou autobloquant ne nécessitant pas d'opération supplémentaire, pour une vis de petit diamètre et en particulier de module inférieur à 1.5 mm. Un besoin existe cependant pour des vis autobloquantes de module inférieur à 1.5 mm, en particulier avec des modules compris entre 0.3 et 1.4 mm.

Pour un diamètre de filet inférieur à 1.5 mm, les exigences au niveau des tolérances liées au filetage intérieur et extérieur sont telles que les moyens de production classiques ne permettent pas une réalisation industrielle de cet assemblage autobloquant.

### Bref résumé de l'invention

Un but de la présente invention est de proposer un système d'assemblage de type vis/écrou autobloquant exempt des limitations des systèmes connus.

Un autre but de l'invention est de proposer un système d'assemblage de type vis/écrou autobloquant adapté à une vis de précision dans lequel le contact entre la vis et l'écrou est maintenu malgré les chocs et vibrations auxquels est soumis l'assemblage.

Un autre but de l'invention est de proposer un assemblage vis/écrou autobloquant, adapté au domaine de l'horlogerie, permettant notamment d'éliminer une étape supplémentaire de verrouillage de la vis par collage ou tout autre procédé.

Un autre but de l'invention est de proposer un procédé de fabrication industrielle d'un assemblage vis/écrou autobloquant adapté au domaine de l'horlogerie.

Selon l'invention, ces buts sont atteints notamment au moyen d'un système d'assemblage autobloquant tel que décrit dans les revendications 1 à 11.

Selon l'invention, ces buts sont également atteints au moyen d'un procédé d'assemblage tel que décrit dans la revendication 12.

Selon l'invention, ces buts sont également atteints au moyen d'un élément taraudé tel que décrit dans les revendications 13 et 14.

Selon l'invention, ces buts sont également atteints au moyen d'un procédé de fabrication d'un élément taraudé tel que décrit dans les revendications 15 et 16.

Un système d'assemblage autobloquant selon l'invention comprend :
- une tige filetée extérieurement présentant un premier filet de diamètre nominal inférieur à 1.5 mm et
- un élément taraudé présentant un deuxième filet de diamètre nominal inférieur à 1.5 mm dont la section longitudinale possède un pas de profil asymétrique,
la surface de contact entre ladite tige filetée et ledit élément taraudé lors de l'assemblage, consistant en une arête hélicoïdale.

Par « section longitudinale » de l'élément taraudé ou de la tige filetée, on entend la coupe de l'élément taraudé ou de la tige filetée selon leur axe longitudinal qui est confondu. Dans le but de faciliter la compréhension de l'invention, l'expression « section longitudinale » de la tige filetée ou de l'élément taraudé se rapporte à uniquement à la partie filetée de la tige filetée ou à la partie taraudée de l'élément taraudé.

Par « pas », on entend l'espace compris entre les axes d'éléments homologues de la structure régulière que constitue le filet de la tige filetée ou celui de l'élément taraudé.

Par « profil », on entend la forme du motif compris dans un pas du filet de la tige filetée ou celui de l'élément taraudé.

Cette solution présente notamment l'avantage par rapport à l'art antérieur d'établir un contact continu entre les filets de l'élément taraudé et de la tige filetée le long d'une arête. En particulier, ce contact continu permet de répartir les efforts de traction sur la longueur totale du filet des parties filetées en contact et donc de réduire la fatigue du système vis/écrou.

Le système d'assemblage selon l'invention présente une tige filetée dont le premier filet comporte une section longitudinale dont le pas présente un profil symétrique. Ce profil est composé d'un premier flanc formant un angle compris entre 50 degrés et 70 degrés par rapport à l'axe longitudinal de la tige filetée, d'un deuxième flanc, symétrique audit premier flanc et formant un angle compris entre -50 degrés et -70 degrés par rapport à l'axe longitudinal de ladite tige filetée. De préférence les angles choisis sont respectivement 60 degrés et -60 degrés. Une portion tronquée, de longueur inférieure ou égale à 15 µm, joint ledit premier flanc et ledit deuxième flanc. Le profil présente une arête entre ladite portion tronquée et ledit deuxième flanc. Un système d'assemblage selon l'invention comprend un élément taraudé muni d'un deuxième filet dont la section longitudinale présente un pas de profil asymétrique. Ce profil asymétrique est composé d'un premier flanc formant un angle compris entre 50 degrés et 70 degrés par rapport à l'axe longitudinal dudit élément taraudé, d'un deuxième flanc, asymétrique audit premier flanc et formant un angle compris entre - 20 degrés et -40 degrés par rapport à l'axe longitudinal dudit élément taraudé et d'une première portion parallèle à l'axe longitudinal dudit élément taraudé. Lesdits premier et deuxième flancs du profil du deuxième filet forment un triangle dont le sommet se superpose à ladite portion tronquée dudit premier filet de la tige filetée.

Cet assemblage présente l'avantage de rester autobloquant même si la vis ou l'écrou n'a pas un profil idéal ; l'usinage de petits modules est donc facilité, puisque les exigences de précision peuvent être réduites sans nuire à la sécurité de l'assemblage.

Dans un système d'assemblage selon l'invention, lors de l'assemblage de ladite tige filetée et dudit élément taraudé, le premier flanc du deuxième filet de l'élément taraudé est parallèle audit premier flanc dudit premier filet de la tige filetée. Le jeu présent entre ces premiers flancs est inférieur à 20 µm. L'espace compris entre ledit sommet dudit deuxième filet de l'élément taraudé et ladite zone tronquée dudit premier filet de la tige filetée présente une surface inférieure à 20x20 µm². Ledit deuxième flanc dudit deuxième filet de l'élément taraudé et ledit deuxième flanc du premier filet de la tige filetée forment au niveau de l'arête un angle compris entre 20 degrés et 40 degrés, de préférence de 30 degrés et un espace délimité par la première portion parallèle à l'axe de l'élément taraudé dudit deuxième filet et l'arrondi dudit premier filet.

Le profil asymétrique du pas dudit deuxième filet de l'élément taraudé peut en outre comporter une deuxième portion parallèle à l'axe longitudinal dudit élément taraudé, de dimension inférieure ou égale à 15 µm. Cette deuxième portion est située en regard de ladite portion tronquée du profil dudit premier filet de ladite tige filetée.

Dans un système d'assemblage selon l'invention, lors de l'assemblage de ladite tige filetée et dudit élément taraudé, le premier flanc du filet de l'élément taraudé est parallèle audit premier flanc dudit filet ladite tige filetée. Le jeu présent entre ces premiers flancs est inférieur à 20 µm. La deuxième portion du filet de l'élément taraudé, parallèle à l'axe longitudinal de l'élément taraudé et ladite portion tronquée dudit filet de la tige filetée sont parallèle et présentent entre elles un jeu inférieur à 20 µm. Le deuxième flanc du filet de l'élément taraudé forme avec le deuxième flanc du filet de la tige filetée au niveau de l'arête de la tige filetée un angle compris entre 20 degrés et 40 degrés, de préférence de 30 degrés et un espace délimité par la première portion dudit filet de l'élément taraudé et l'arrondi dudit filet de la tige filetée.

La géométrie particulière de la section longitudinale de l'élément taraudé, notamment son asymétrie et le choix des angles présentent l'avantage d'assurer un contact continu le long du filet de la tige filetée. Les dimensions de la tige filetée telles que la longueur de la portion tronquée sont de l'ordre de quelques micromètres. Il peut arriver par exemple que cette portion tronquée soit légèrement abîmée ou que sa largeur soit différente sur une certaine zone de la tige filetée. Dans ce cas, le flanc de l'élément taraudé est orienté de manière à ce qu'il y ait toujours un point de contact tout au long du filet de la tige filetée, ainsi l'arête hélicoïdale constituant la surface de contact entre le filet de la tige filetée et de l'élément taraudé reste continue malgré les défauts que peut présenter le filet de la tige filetée. Un système d'assemblage autobloquant selon l'invention se rapporte à une tige filetée et un élément taraudé dont les diamètres nominaux respectifs sont compris entre 0.3 et 1.4 mm.

Dans un système d'assemblage selon l'invention, la surface de contact entre ledit élément taraudé et ladite tige filetée se réduit à une ligne de contact entre l'arête de ladite tige filetée et le deuxième flanc dudit élément taraudé.

Un tel système d'assemblage présente l'avantage de pouvoir être utilisé en particulier dans le domaine de l'horlogerie.

En effet, les systèmes vis/écrou utilisés dans un mouvement de montre subissent des chocs, des vibrations, des opérations de desserrage et de resserrage qui sont susceptibles d'altérer le filet de la vis et risquent ainsi de réduire la qualité du contact entre les filets de la vis et de l'écrou et avec le temps de provoquer le desserrage de l'ensemble vis-écrou. L'utilisation du système autobloquant selon l'invention constitue un frein mécanique permettant ainsi d'éviter l'insuffisance de serrage et par suite, le dévissage involontaire de la vis.

D'autre part, le système autobloquant permet d'effectuer plusieurs opérations de desserrage et de resserrage de la vis sans pour autant altérer le verrouillage de l'assemblage, également nommé frein filet mécanique.

Dans un assemblage vis/écrou selon l'invention, le profil du filet de l'élément taraudé obtenu par un procédé de fabrication, par exemple de fraisage, permet de réduire le niveau de précision de fabrication requis. En effet lors de l'assemblage d'une tige filetée standard et de l'élément taraudé selon le profil décrit précédemment, le contact entre la tige et l'écrou est maintenu même si le degré de précision de fabrication de la tige filetée ou de l'élément taraudé est légèrement inférieur au degré de précision requis. L'assemblage tige filetée/élément taraudé selon l'invention répond ainsi aux exigences requises par le domaine de l'horlogerie concernant la tenue et le serrage des vis. Les niveaux de précision et de qualité requis dans le domaine de l'horlogerie sont garantis par les normes de l'industrie horlogère suisse (NIHS) et les normes internes propres à chaque horloger.

Lors de l'assemblage de la tige filetée et de l'élément taraudé d'un système d'assemblage autobloquant selon l'invention, il existe un jeu entre les flancs des filets de ladite tige filetée et dudit élément taraudé dû à la forme asymétrique du filet dudit élément taraudé. Ce jeu permet notamment un vissage rapide et sans effort jusqu'au blocage de la tige filetée dans l'élément taraudé.

Malgré l'utilisation de clé dynamométrique lors de l'opération d'assemblage, le couple de serrage appliqué sur le filet de la tige filetée peut provoquer la déformation dudit filet. Le jeu compris entre les flancs du filet de l'élément taraudé et du filet de la tige filetée permet de tolérer cette déformation tout en maintenant une surface de contact le long d'une arête hélicoïdale.

Un procédé pour assembler un système d'assemblage autobloquant selon l'invention met en oeuvre une opération de vissage impliquant un effort de traction. Cet effort de traction provoque l'auto-centrage de ladite tige filetée par la mise en contact de l'arête de ladite tige avec les flancs du filet dudit élément taraudé et engendre un contact tangentiel et continu sur toute la longueur du filet de ladite tige jusqu'à son blocage. Ceci permet notamment de répartir l'effort de traction le long dudit filet de ladite tige filetée. Un élément taraudé obtenu selon l'invention possède un diamètre nominal inférieur à 1.5 mm et comprend un filet dont la section longitudinale présentant un pas de profil asymétrique. Ce profil asymétrique est composé d'un premier flanc formant un angle compris entre 50 degrés et 70 degrés par rapport à l'axe longitudinal dudit élément taraudé, d'un deuxième flanc, asymétrique audit premier flanc et formant un angle compris entre -20 degrés et -40 degrés par rapport à l'axe longitudinal dudit élément taraudé et d'une première portion parallèle à l'axe longitudinal dudit élément taraudé.

Selon l'invention, le profil asymétrique du pas de la section longitudinale du filet de l'élément taraudé peut comporter en outre une deuxième portion de dimension inférieure ou égale à 15 µm, parallèle à l'axe longitudinal dudit élément taraudé.

Un procédé de fabrication d'un élément taraudé selon un mode de réalisation de l'invention consiste à fraiser un filet dont la section longitudinale présente un pas de profil asymétrique composé d'un premier flanc formant un angle compris entre 50 degrés et 70 degrés par rapport à l'axe longitudinal dudit élément taraudé, de préférence de 60 degrés, d'un deuxième flanc asymétrique audit premier flanc et formant un angle compris entre -20 degrés et -40 degrés par rapport à l'axe longitudinal dudit élément taraudé, de préférence -30 degrés et d'une première portion parallèle à l'axe longitudinal dudit élément taraudé.

Un procédé de fabrication d'un élément taraudé selon un autre mode de réalisation de l'invention consiste à fraiser un filet dont la section longitudinale présente un pas de profil asymétrique composé d'un premier flanc formant un angle compris entre 50 degrés et 70 degrés par rapport à l'axe longitudinal dudit élément taraudé, de préférence de 60 degrés, d'un deuxième flanc asymétrique audit premier flanc et formant un angle compris entre -20 degrés et -40 degrés par rapport à l'axe longitudinal dudit élément taraudé, de préférence -30 degrés et d'une première portion parallèle à l'axe longitudinal dudit élément taraudé et en outre d'une deuxième portion de dimension inférieure ou égale à 15 µm, joignant lesdits premier et deuxième flancs du profil de l'élément taraudé.

Le procédé de fabrication d'un élément taraudé selon l'invention présente l'avantage de permettre une tenue et un serrage suffisant des vis tels que requis dans le domaine de l'horlogerie. Le profil du filet de l'élément taraudé obtenu par l'opération de fabrication, par exemple de fraisage, permet de réduire le niveau de précision de fabrication requis. En effet lors de l'assemblage d'une tige filetée standard et de l'élément taraudé selon le profil décrit précédemment, le contact entre la tige et l'écrou est maintenu même si le degré de précision de fabrication de la tige filetée ou de l'élément taraudé est légèrement inférieur au degré de précision requis. L'assemblage tige filetée/élément taraudé selon l'invention répond ainsi aux exigences requises par le domaine de l'horlogerie concernant la tenue et le serrage des vis.

Le système d'assemblage autobloquant, le procédé d'assemblage de ce système, l'élément taraudé et son procédé de fabrication selon l'invention étant adaptés à des systèmes vis-écrou dont le diamètre est compris entre 0.3 et 1.4 mm présentent l'avantage par rapport à l'art antérieur de garantir le degré de précision de serrage requis pour le domaine de l'horlogerie.

### Brève description des figures

Des exemples de mise en oeuvre de l'invention sont indiqués dans la description illustrée par les figures annexées dans lesquelles :
La figure 1 illustre une vue en coupe de l'assemblage selon l'invention.
La figure 2a illustre une portion de la section longitudinale d'un assemblage autobloquant selon une première variante de l'invention.
La figure 2b illustre une portion de la section longitudinale d'un assemblage autobloquant selon une deuxième variante de l'invention.

### Exemple(s) de mode de réalisation de l'invention

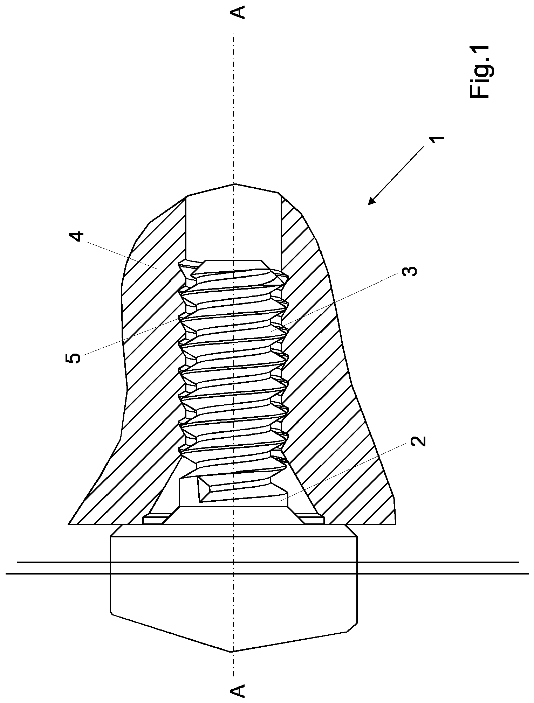

La figure 1 illustre l'assemblage autobloquant de type vis-écrou 1 selon l'invention. L'axe longitudinal AA est commun à la tige filetée 2 et à l'élément taraudé 4.

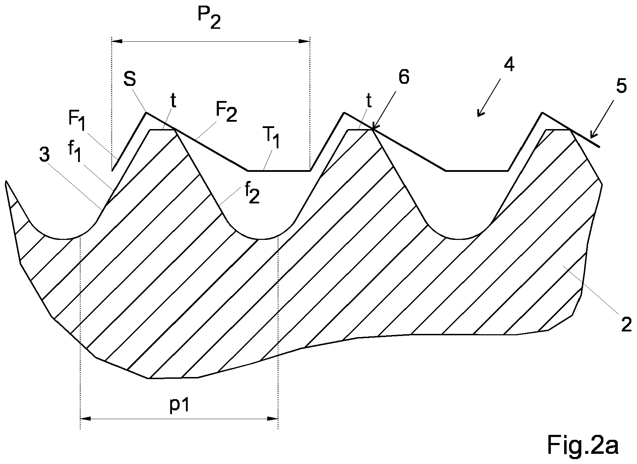

La figure 2a illustre une portion de la section longitudinale AA d'un assemblage autobloquant selon une première variante de l'invention.

Dans cette première variante, un élément taraudé 4 présente un filet 5, appelé plus loin le « deuxième filet » pour le distinguer du premier filet 3. Chaque filet comporte deux flancs. Ce deuxième filet 5 comporte une section longitudinale selon l'axe longitudinal AA avec un profil de pas asymétrique. Chaque pas P2 du filet 5 comporte un premier flanc F1 formant un angle d'environ 60 degrés par rapport à l'axe longitudinal de l'élément taraudé 4, un deuxième flanc F2, asymétrique par rapport au premier flanc F1 et formant un angle d'environ -30° par rapport à l'axe longitudinal AA, et une portion T1 sensiblement parallèle à l'axe longitudinal AA. Le pas correspond à la distance entre deux sommets consécutifs d'un même filet. Le pas P2 est choisi pour être compris entre 0.08 mm et 0.3 mm, il est typiquement de 0.15 mm. La succession de pas dans l'élément taraudé montre un pas de profil asymétrique.

Une tige filetée 2 présente un premier filet 3 dont le profil du pas p1 de la section longitudinale est symétrique. Elle comporte un premier flanc f1 formant un angle d'environ 60 degrés par rapport à l'axe longitudinal AA de la tige filetée 2, un deuxième flanc f2, symétrique par rapport au premier flanc f1 et formant un angle d'environ -60 degrés par rapport à l'axe longitudinal de la tige filetée 2, une portion tronquée t joignant le premier flanc f1 et le deuxième flanc f2, et une arête 6. L'arête 6 représente la surface de contact entre la portion tronquée t de la tige filetée et le deuxième flanc F2 de l'élément taraudé 4. Le pas p1 est choisi pour être compris entre 0.08 mm et 0.3 mm et il est typiquement de 0.15mm. La dimension de la portion tronquée t de la tige filetée 2 peut être comprise entre 5 et 20 µm.

Le contact entre les filets de la vis 2 et de l'écrou 4 est représenté par un point de contact 6 sur le profil du pas de la tige filetée. Ce contact consiste en une arête hélicoïdale tout le long des filets 3 et 5 de l'assemblage.

Cette figure illustre les différents jeux prévus dans l'assemblage de l'élément taraudé et de la tige filetée. Les flancs F1 et f1 sont parallèles et présentent entre eux un jeu inférieur à 20 µm. L'espace compris entre le sommet S et la zone tronquée t est typiquement inférieure à 20x20 µm². Le volume délimité par l'arrondi du filet 3 de la tige filetée 2, la portion T1 et les partie inférieures des flancs f1 et f2, est plus important que les jeux précédents. Ce volume permet de compenser d'éventuelles déformations du filet de la tige filetée 2.

Sur cette figure, le flanc F2 est orienté par rapport au flanc f2 de manière à ce qu'il ne soit pas parallèle au flanc f2. Si les flancs F2 et f2 étaient parallèles, le contact entre les filets 3 et 5 ne serait pas assuré au cas où le filet de la vis ou de l'écrou venait à présenter le moindre défaut.

De même, si le flanc F2 était parallèle à la zone tronquée il ne serait pas possible d'assurer un assemblage des deux filets le long d'une ligne précise.

Dans le cas où la zone tronquée t du filet de la vis serait déformée, ou en cas d'usinage imprécis du premier ou du deuxième profil, l'orientation du flanc F2 et le jeu présent entre les flancs F2 et f2 permettent de garantir malgré tout, l'existence d'une ligne de contact entre les deux filets.

Le profil du filet et notamment l'orientation du flanc F2 garantissent l'existence d'un contact selon une ligne qui suit le filet et constitue une arête hélicoïdale tout au long de l'assemblage vis/écrou.

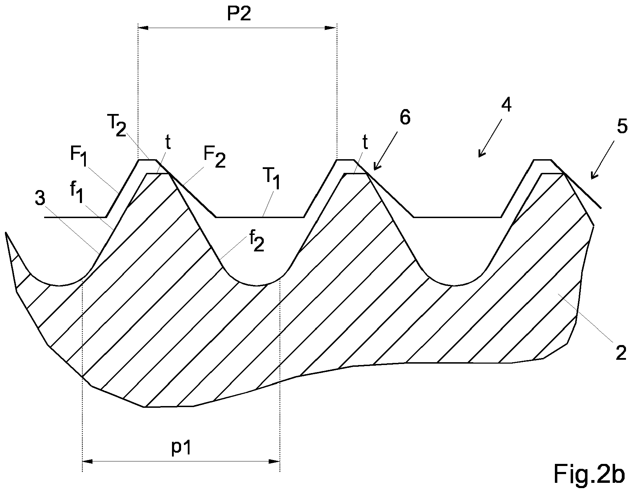

La figure 2b illustre une portion de la section longitudinale d'un assemblage autobloquant selon une deuxième variante de l'invention.

Dans cette deuxième variante, un élément taraudé 4 présente un filet 5 dont la section longitudinale est asymétrique. Elle est composée d'un premier flanc F1 formant un angle d'environ 60 degrés par rapport à l'axe longitudinal AA, d'un deuxième flanc F2, asymétrique par rapport au premier flanc F1 et formant un angle d'environ -30 degrés par rapport à l'axe longitudinal AA, d'une portion T1 parallèle à l'axe AA, et d'une portion tronquée T2 joignant le premier flanc F1 et le deuxième flanc F2.

La tige filetée 2 de cette deuxième variante est identique à la tige filetée 2 de la première variante.

La figure 2b illustre un mode de réalisation dans lequel le filet 3 de la tige filetée 2 et le filet 5 de l'élément taraudé 4 présentent une portion tronquée, respectivement t et T2. On voit dans cette deuxième variante que le contact entre le filet 3 de la tige 2 et le filet 5 de l'élément taraudé 4 s'établit également ponctuellement au niveau de l'arête 6.

Un mode de réalisation possible dans lequel le filet 3 de la tige filetée 2 ne possède pas de portion tronquée t joignant les deux flancs f1 et f2 n'a pas été représenté. La portion tronquée t est cependant avantageuse, car elle offre un volume entre l'écrou et la vis dans lequel la matière peut se déformer lors du serrage de la vis, de manière à éviter un blocage de la vis en un seul point de l'assemblage.

Les assemblages vis/écrou, leurs outils et leur méthode de fabrication selon la présente invention ont été décrits en se référant en particulier au domaine de l'horlogerie, mais ne sont pas limités à ce domaine d'application.

### Numéros de référence employés sur les figures

- 1: Système d'assemblage autobloquant
- 2: Tige filetée
- 3: Premier filet de la tige filetée 2
- 4: Elément taraudé
- 5: Deuxième filet de l'élément taraudé 4
- 6: Point de contact entre les filets 3 et 5
- p1: Profil du pas du filet 3
- f1, f2: Flancs du profil p1
- t: Portion tronquée du profil p1
- P2: Profil du pas du filet 5
- F1, F2: Flancs du profil P2
- T1, T2: Portions du profil P2
- S: Sommet du profil P2

## Revendications

1. Système d'assemblage autobloquant comprenant
- un élément (2) fileté extérieurement présentant un premier filet (3) comprenant un premier flanc (f1) et un deuxième flanc (f2) et
- un élément taraudé (4) présentant un deuxième filet (5) comprenant un premier flanc (F1) et un deuxième flanc (F2),
**caractérisé en ce que**,
- ledit élément fileté extérieurement est une tige (2),
- le diamètre nominal dudit premier filet (3) est inférieur à 1.5 mm,
- la section longitudinale dudit deuxième filet (5) possède un pas de profil (P2) asymétrique,
- le diamètre nominal du deuxième filet (5) est inférieur à 1.5 mm
et **en ce que** lors de l'assemblage,
- la surface de contact entre ladite tige (2) filetée et ledit élément taraudé (4) consiste en une arête hélicoïdale (6),
- ledit premier flanc (f1) du premier filet (3) est parallèle audit premier flanc (F1) du deuxième filet (5), le jeu entre les premiers flancs (f1, F1) étant inférieur à 20 µm.

2. Système d'assemblage selon la revendication 1, **caractérisé en ce que** ledit premier filet (3) comporte une section longitudinale dont le pas présente un profil symétrique (p1) composé d'un premier flanc (f1) formant un angle compris entre 50 degrés et 70 degrés par rapport à l'axe longitudinal de ladite tige filetée (2), d'un deuxième flanc (f2), symétrique audit premier flanc (f1) et formant un angle compris entre 50 degrés et 70 degrés par rapport à l'axe longitudinal de ladite tige filetée (2), d'une portion tronquée (t) joignant le premier flanc (f1) et le deuxième flanc (f2), d'une arête (6) située à la jonction entre ladite portion tronquée (t) et ledit deuxième flanc (f2).

3. Système d'assemblage selon la revendication 2, **caractérisé en ce que** la longueur de ladite portion tronquée (t) dudit filet (3) de ladite tige filetée (2) est inférieure ou égale à 15 µm.

4. Système d'assemblage selon les revendications 1 à 3, **caractérisé en ce que** ledit profil (P2) dudit deuxième filet (5) présente un premier flanc (F1) formant un angle compris entre 50 degrés et 70 degrés par rapport à l'axe longitudinal dudit élément taraudé (4), un deuxième flanc (F2), asymétrique audit premier flanc (F1) et formant un angle compris entre -20 degrés et -40 degrés par rapport à l'axe longitudinal dudit élément taraudé (4), lesdits premier et deuxième flancs (F1 et F2) formant un triangle dont le sommet (S) se superpose à ladite portion tronquée (t) dudit premier filet (3) et une première portion (T1) parallèle à l'axe longitudinal dudit élément taraudé (4).

5. Système d'assemblage (1) selon l'une des revendications 2 à 4, **caractérisé en ce que** lors de l'assemblage de ladite tige filetée (2) et dudit élément taraudé (4), l'espace compris entre ledit sommet (S) dudit deuxième filet (5) et ladite zone tronquée (t) dudit premier filet (3) présente une surface inférieure à 20x20 µm², et ledit flanc (F2) dudit deuxième filet (5) forme avec ledit flanc (f2) du premier filet (3) au niveau de l'arête (6) un angle compris entre 20 degrés et 40 degrés et un espace délimité par la portion (T1) dudit deuxième filet (5) et l'arrondi dudit premier filet (3).

6. Système d'assemblage selon les revendications 4 ou 5, **caractérisé en ce que** le profil asymétrique (P2) du pas dudit deuxième filet (5) de l'élément taraudé (4) comporte en outre une deuxième portion (T2) parallèle à l'axe longitudinal dudit élément taraudé (4), de dimension inférieure ou égale à 15 µm et située en regard de ladite portion tronquée (t) dudit premier filet (3) de ladite tige filetée (2).

7. Système d'assemblage (1) selon la revendication 6, **caractérisé en ce que** lors de l'assemblage de ladite tige filetée (2) et dudit élément taraudé (4), ledit flanc (F1) dudit deuxième filet (5) est parallèle audit flanc (f1) dudit premier filet (3), le jeu présent entre lesdits flancs (f1 et F1) étant inférieur à 20 µm, et ladite portion (T2) dudit deuxième filet (5) parallèle à ladite portion tronquée (t) dudit premier filet (3) présentent entre elles un jeu inférieur à 20 µm, et ledit flanc (F2) forme avec ledit flanc (f2) au niveau de l'arête (6) un angle compris entre 20 degrés et 40 degrés offrant un espace délimité par la portion (T1) dudit deuxième filet (5) et l'arrondi dudit premier filet (3).

8. Système d'assemblage selon l'une des revendications 1 à 7, **caractérisé en ce que** le diamètre nominal dudit premier filet (3) de ladite tige filetée (2) est compris entre 0.3 et 1.4 mm.

9. Système d'assemblage selon l'une des revendications 1 à 8, **caractérisé en ce que** le diamètre nominal dudit deuxième filet (5) dudit élément taraudé (4) est compris entre 0.3 et 1.4 mm.

10. Système d'assemblage selon les revendications 1 à 9, **caractérisé en ce que** la surface de contact entre ledit élément taraudé (4) et ladite tige filetée (2) se réduit à une ligne de contact entre ladite arête (6) de ladite tige filetée (2) et ledit deuxième flanc (F2) dudit élément taraudé (4).

11. Système d'assemblage (1) selon l'une des revendications 1 à 10, **caractérisé en ce que** lors de l'assemblage de ladite tige filetée (2) et dudit élément taraudé (4), il existe un jeu entre lesdits flancs (f1, f2) dudit premier filet (3) et les flancs (F1, F2) dudit deuxième filet (5) dû à la forme asymétrique dudit deuxième filet (5) dudit élément taraudé (4), permettant un vissage rapide et sans effort jusqu'au blocage de ladite tige filetée (2) dans ledit élément taraudé (4).

12. Procédé de montage d'un système d'assemblage autobloquant selon les revendications 1 à 9, **caractérisé en ce que** l'effort de traction appliqué lors du vissage provoque l'auto-centrage de ladite tige (2) par la mise en contact de l'arête (6) de ladite tige (2) avec les flancs (F2) dudit filet (5) dudit élément taraudé (4) et engendre un contact tangentiel et continu sur toute la longueur du filet (3) de ladite tige (2) jusqu'à son blocage, permettant ainsi de répartir l'effort de traction le long dudit filet (3) de ladite tige filetée (2).

13. Elément taraudé (4) comprenant un filet (5) **caractérisé en ce que**
- le diamètre nominal dudit filet (5) est inférieur à 1.5 mm,
- ledit filet (5) comporte une section longitudinale présentant un pas de profil (P2) asymétrique composé d'un premier flanc (F1) formant un angle compris entre 50 degrés et 70 degrés par rapport à l'axe longitudinal dudit élément (4) taraudé, d'un deuxième flanc (F2), asymétrique audit premier flanc (F1) et formant un angle compris entre -20 degrés et -40 degrés par rapport à l'axe longitudinal dudit élément taraudé (4) et d'une première portion (T1) parallèle à l'axe longitudinal dudit élément (4) taraudé,
et **en ce que** le profil asymétrique (P2) du pas dudit deuxième filet (5) de l'élément taraudé (4) comporte en outre une deuxième portion (T2) parallèle à l'axe longitudinal dudit élément taraudé (4) de dimension inférieure ou égale à 15 µm.

14. Elément taraudé (4) selon la revendication 13, **caractérisé en ce que** ladite deuxième portion (T2) joint ledit flanc (F1) et ledit flanc (F2).

15. Procédé de fabrication d'un élément taraudé (4),
**caractérisé en ce qu'**il consiste à tailler un filet (5) dont la section longitudinale présente un pas de profil (P2) asymétrique composé d'un premier flanc (F1) formant un angle compris entre 50 degrés et 70 degrés par rapport à l'axe longitudinal dudit élément taraudé (4), d'un deuxième flanc (F2), asymétrique audit premier flanc (F1) et formant un angle compris entre -20 degrés et -40 degrés par rapport à l'axe longitudinal dudit élément taraudé (4) et d'une première portion (T1) parallèle à l'axe longitudinal dudit élément (4) taraudé
et **en ce que** le profil asymétrique (P2) du pas dudit deuxième filet (5) de l'élément taraudé (4) comporte en outre une deuxième portion (T2) parallèle à l'axe longitudinal dudit élément taraudé (4) de dimension inférieure ou égale à 15 µm.

16. Procédé selon la revendication 15, **caractérisé en ce que** ladite deuxième portion (T2) joint ledit flanc (F1) et ledit flanc (F2).

17. Procédé selon l'une des revendications 15 ou 16, **caractérisé en ce que** ledit filet (5) est taillé par fraisage.

## Patentansprüche

1. Selbstblockierendes Befestigungssystem aufweisend:
- ein mit einem Aussengewinde versehenen Element (2) mit einem ersten Gewinde (3), die eine erste Flanke (f1) und eine zweite Flanke (f2) aufweist, und
- ein mit einem Innengewinde versehenem Element (4) mit einem zweiten Gewinde (5), die eine erste Flanke (F1) und eine zweite Flanke (F2) aufweist,
**dadurch gekennzeichnet, dass**
das mit einem Aussengewinde versehenes Element (2) ein Stab ist (2);
der nominelle Durchmesser des ersten Gewindes (3) weniger als 1,5 mm ist;
der Längsschnitt des zweiten Gewindes (5) ein asymmetrisches Abstandsprofil (P2) hat;
der nominelle Durchmesser des zweiten Gewindes (5) weniger als 1,5 mm ist
und dass während der Montage,
- die Kontaktfläche zwischen dem mit einem Aussengewinde versehenen Stab (2) und dem mit einem Innengewinde versehenen Element (4) aus einem schneckenförmigen Steg (6) besteht,
die Flanke (f1) des ersten Gewindes (5) parallel zu der Flanke (F1) des zweiten Gewindes (3) ist, wobei das Spiel zwischen den Flanken (f1, F1) weniger als 20 µm ist.

2. Befestigungssystem nach Anspruch 1, **dadurch gekennzeichnet, dass** das erste Gewinde (3), dessen Längsschnitt ein symmetrisches Abstandsprofil (p1) hat, aus einer ersten Flanke (f1), die einen Winkel zwischen 50 Grad und 70 Grad in Bezug auf die Längsachse des mit einem Aussengewinde versehenen Stabs (2) ausbildet, aus einer zweiten Flanke (f2), die symmetrisch zu der ersten Flanke (f1) ist und einen Winkel zwischen 50 Grad und 70 Grad in Bezug auf die Längsachse des mit einem Aussengewinde versehenen Stabs (2) ausbildet, aus einen abgestumpften Bereich (t), der die erste Flanke (f1) und die zweite Flanke (f2) verbindet, und aus einer Kante (6), die an der Verbindung zwischen dem abgestumpften Bereich (t) und der zweiten Flanke (f2) angeordnet ist, besteht.

3. Befestigungssystem nach Anspruch 2, **dadurch gekennzeichnet, dass** die Länge des abgestumpften Bereichs (t) des Gewindes (3) des mit einem Aussengewinde versehenen Stabs (2) weniger als oder gleich 15 µm ist.

4. Befestigungssystem nach einem der Ansprüche 1 bis 3, **dadurch gekennzeichnet, dass** das Profil (P2) des zweiten Gewindes (5) eine erste Flanke (F1), die einen Winkel zwischen 50 Grad und 70 Grad in Bezug auf die Längsachse des mit einem Innengewinde versehenen Elements (4) ausbildet, eine zweite Flanke (F2), die asymmetrisch zu der ersten Flanke (F1) ist und einen Winkel zwischen -20 Grad und -40 Grad in Bezug auf die Längsachse des mit einem Innengewinde versehenen Elements (4) ausbildet, wobei die erste und zweite Flanke (F1 und F2) ein Dreieck ausbilden, dessen Spitze (S) über dem abgestumpften Bereich (t) des ersten Gewindes (3) angeordnet ist, und einen ersten Bereich (T1), der parallel zu der Längsachse des mit einem Innengewinde versehenen Elements (4) ist, aufweist,.

5. Befestigungssystem (1) nach einem der Ansprüche 2 bis 4, **dadurch gekennzeichnet, dass** währen der Montage des mit einem Aussengewinde versehenen Stabs (2) und des mit dem Innengewinde versehenen Elements (4) der Platz zwischen der Spitze (S) des zweiten Gewindes (5) und dem abgestumpften Bereichs (t) des ersten Gewindes (3) eine Oberfläche von weniger als 20x20 µm² aufweist, und die Flanke (F2) des zweiten Gewindes (5) mit der Flanke (f2) des ersten Gewindes (3) an der Kante (6) einen Winkel zwischen 20 Grad und 40 Grad und einen durch den Bereich (T1) des zweiten Gewindes (5) und die Rundung des ersten Gewindes (3) definierten Platz ausbildet.

6. Befestigungssystem nach Anspruch 4 oder 5, **dadurch gekennzeichnet, dass** das asymmetrische Abstandsprofil (P2) des zweiten Gewindes (5) des mit einem Innengewinde versehenen Elements (4) weiter einen zweiten Bereich (T2), der parallel zu der Längsachse des mit einem Innengewinde versehenen Elements (4) ist, mit Dimensionen weniger als oder gleich 15 µm aufweist, der in der Nähe des abgestumpften Bereichs (t) des ersten Gewindes (3) des mit einem Aussengewinde versehenen Stabs (2) angeordnet ist.

7. Befestigungssystem nach Anspruch 6, **dadurch gekennzeichnet, dass** während der Montage des mit einem Aussengewinde versehenen Stabs (2) und des mit einem Innengewinde versehenen Elements (4) die Flanke (F1) des zweiten Gewindes (5) parallel zu der Flanke (f1) des ersten Gewindes (3) ist, wobei das Spiel zwischen den Flanken (f1 und F1) weniger als 20 µm ist, und der Bereich (T2) des zweiten Gewindes (5), der parallel zu dem abgestumpften Bereich (t) des ersten Gewindes (3) ist, dazwischen ein Spiel von weniger als 20 µm aufweist, und die Flanke (F2) mit der Flanke (f2) an der Kante (6) einen Winkel zwischen 20 Grad und 40 Grad und einen durch den Bereich (T1) des zweiten Gewindes (5) und die Rundung des ersten Gewindes (3) begrenzten Platz ausbildet.

8. Befestigungssystem nach einem der Ansprüche 1 bis 7, **dadurch gekennzeichnet, dass** der nominelle Durchmesser des ersten Gewindes (3) des mit einem Aussengewinde versehenen Stabs (2) zwischen 0.3 und 1.4 liegt.

9. Befestigungssystem (1) nach einem der Ansprüche 1 bis 8, **dadurch gekennzeichnet, dass** der nominelle Durchmesser des zweiten Gewindes (5) des mit einem Innengewinde versehenen Elements (4) zwischen 0.3 und 1.4 liegt.

10. Befestigungssystem (1) nach einem der Ansprüche 1 bis 9, **dadurch gekennzeichnet, dass** die Kontaktfläche zwischen dem mit einem Aussengewinde versehenen Stab (2) und dem mit einem Innengewinde versehenen Element (4) auf eine Kontaktlinie zwischen der Kante (6) des mit einem Aussengewinde versehenen Stabs (2) und der zweiten Flanke (F2) des mit einem Innengewinde versehenen Elements (4) reduziert ist.

11. Befestigungssystem (1) nach einem der Ansprüche 1 bis 10, **dadurch gekennzeichnet, dass** während der Montage des mit einem Aussengewinde versehenen Stabs (2) und des mit einem Innengewinde versehenen Elements (4) es ein Spiel zwischen den Flanken (f1, f2) des ersten Gewindes (3) und den Flanken (F1, F2) des zweiten Gewindes (5) aufgrund der asymmetrischen Form des zweiten Gewindes (5) des mit einem Innengewinde versehenen Elements (4) gibt, das eine schnelles und kraftloses Schrauben bis zum Verschliessen des mit einem Aussengewinde versehenen Stabs (2) in das mit einem Innengewinde versehenem Element (4) erlaubt.

12. Verfahren zum Montieren eines selbstblockierenden Befestigungssystems nach einem der Ansprüche 1 bis 9, **dadurch gekennzeichnet, dass** die während dem Schraubens angewandte Zugfestigkeit eine Zentrierung des Stabs (2) durch das Kontaktieren der Kante (6) des Stabs (2) mit der Flanke (F2) des Gewindes (5) des mit einem Innengewinde versehenen Elements (4) verursacht eine tangentialen und kontinuierlichen über die gesamte Länge des Gewindes (3) des Stabs (2) bis zum Verschluss generiert, um so der Zugfestigkeit zu erlauben, über das Gewinde (3) des mit einem Aussengewinde versehenen Stabs (2) zu verteilen.

13. Innengewindeelement (4) mit einem Gewinde (5), und **dadurch gekennzeichnet, dass**
der nominelle Durchmesser des Gewindes (5) weniger als 1,5 mm ist;
das Gewinde (5) einen Längsschnitt ein asymmetrisches Abstandsprofil (P2) aufweist bestehend aus einer ersten Flanke (F1), die einen Winkel zwischen 50 Grad und 70 Grad in Bezug auf die Längsachse des mit einem Innengewindeelements (4) ausbildet, aus einer zweiten Flanke (F2), die asymmetrisch zu der ersten Flanke (F1) ist und einen Winkel zwischen -20 Grad und -40 Grad in Bezug auf die Längsachse des Innengewindeelements (4) ausbildet, und aus einen ersten Bereich (T1), der parallel zu der Längsachse des mit einem Innengewinde versehenen Elements (4) ist,
und dass das asymmetrische Abstandsprofil (P2) des Längsschnitts des Gewindes (5) weiter einen zweiten Bereich (T2) mit Dimensionen weniger als oder gleich -15 µm aufweist, der parallel zu der Längsachse des Elements (4) ist.

14. Innengewindeelement (4) gemäss Anspruch 13, **dadurch gekennzeichnet, dass** der benannte zweite Bereich (T2) die Flanke (F1) und die Flanke (F2) verbindet.

15. Verfahren für das Herstellen eines Innengewindeelements (4),
**dadurch gekennzeichnet, dass** es die Schritte aufweist: Schneiden eines Gewindes (5), dessen Längsschnitt ein asymmetrisches Abstandsprofil (P2) aufweist, bestehend aus einer ersten Flanke (F1), die einen Winkel zwischen 50 Grad und 70 Grad in Bezug auf die Längsachse des Innengewindeelements (4) ausbildet, aus einer zweiten Flanke (F2), die asymmetrisch zu der ersten Flanke (F1) ist und einen Winkel zwischen -20 Grad und -40 Grad in Bezug auf die Längsachse des Innengewindeelements (4) ausbildet, und aus einen ersten Bereich (T1), der parallel zu der Längsachse des mit einem Innengewinde versehenen Elements (4) ist;
und dass das asymmetrische Abstandsprofil (P2) des Längsschnitts weiter einen zweiten Bereich (T2) mit Dimensionen weniger als oder gleich -15 µm aufweist, der parallel zu der Längsachse des Elements (4) ist.

16. Verfahren gemäss Anspruch 15, dass der benannte zweite Bereich (T2) die Flanke (F1) und die Flanke (F2) verbindet.

17. Verfahren nach einem der Ansprüche 15 oder 16, **dadurch gekennzeichnet, dass** das Gewinde (5) durch Fräsen geschnitten wird.

## Claims

1. Self-locking fastener system comprising
- an externally threaded element (2) having a first thread (3) comprising a first flank (f1) and a second flank (f2),
and
- a threaded member (4) having a second thread (5) comprising a first flank (F1) and a second flank (F2),
**characterized in that**
said externally threaded element is a rod (2);
the nominal diameter of said first thread (3) is less than 1.5mm;
the longitudinal section of said second thread (5) has a pitch of asymmetric profile (P2);
the nominal diameter of the second thread (5) is less than 1.5mm
and **in that** during assembly,
the contact surface between said threaded rod (2) and said threaded element (4) consists of a helical ridge (6),
said flank (f1) of said first thread (3) is parallel to said flank (F1) of said second thread (5), wherein the play between said flanks (f1,F1) is less than 20µm.

2. Fastener system according to claim 1, **characterized in that** said first thread (3) has a longitudinal section whose pitch has a symmetrical profile (p1) consisting of a first flank (f1) forming an angle of between 50 degrees and 70 degrees with respect to the longitudinal axis of said threaded rod (2), of a second flank (f2), symmetrical to said first flank (f1) and forming an angle of between 50 degrees and 70 degrees with respect to the longitudinal axis of said threaded rod (2), of a truncated portion (t) joining the first flank (f1) and the second flank (f2), of an edge (6) located at the junction between said truncated portion (t) and said second flank (f2).

3. Fastener system according to claim 2, **characterized in that** the length of said truncated portion (t) of said thread (3) of said threaded rod (2) is less than or equal to 15µm.

4. Fastener system according to claims 1 to 3, **characterized in that** said profile (P2) of said second thread (5) has a first flank (F1) forming an angle of between 50 degrees and 70 degrees relative to the longitudinal axis of said threaded element (4), a second flank (F2), asymmetrical said first flank (F1) and forming an angle of between -20 degrees and -40 degrees relative to the longitudinal axis of said threaded element (4), wherein said first and second flanks (F1 and F2) form a triangle whose apex (S) is superimposed to said truncated portion (t) of said first thread (3) and a first portion (T1) parallel to the longitudinal axis of said threaded element (4).

5. Fastener system (1) according to one of claims 2 to 4,
**characterized in that** during assembly of said threaded rod (2) and of said threaded element (4), the space comprised between said apex (S) of said second thread (5) and said truncated area (t) of said first thread (3) has a surface less than 20x20µm², and said flank (F2) of said second thread (5) forms with said flank (f2) of the first thread (3) at the edge (6) an angle comprised between 20 degrees and 40 degrees and a space defined by the portion (T1) of said second thread (5) and the rounding of said first thread (3).

6. Fastener system according to claims 4 or 5, **characterized in that** the asymmetric profile (P2) of the pitch of said second thread (5) of the threaded element (4) further comprises a second portion (T2) parallel to the longitudinal axis of said threaded element (4), of dimension less than or equal to 15µm and arranged next to said truncated portion (t) of said first thread (3) of said threaded rod (2).

7. Fastener system (1) according to claim 6, **characterized in that** during assembly of said threaded rod (2) and of said threaded element (4), said flank (F1) of said second thread (5) is parallel to said flank (f1) of said first thread (3), wherein the play between said flanks (f1 and F1) is less than 20µm, and said portion (T2) of said second thread (5) parallel to said truncated portion (t) of said first thread (3) have between them a clearance of less than 20µm, and said flank (F2) forms with said flank (f2) at the edge (6) an angle comprised between 20 degrees and 40 degrees providing a space delimited by the portion (T1) of said second thread (5) and the rounding of said first thread (3).

8. Fastener system according to one of claims 1 to 7, **characterized in that** the nominal diameter of said first thread (3) of said threaded rod (2) is comprised between 0.3 and 1.4 mm.

9. Fastener system according to one of claims 1 to 8, **characterized in that** the nominal diameter of said second thread (5) of said threaded element (4) is comprised between 0.3 and 1.4 mm.

10. Fastener system according to claims 1 to 9, **characterized in that** the contact surface between said threaded element (4) and said threaded rod (2) is reduced to a line of contact between said edge (6) of said threaded rod (2) and said second flank (F2) of said threaded element (4).

11. Fastener system (1) according to one of claims 1 to 10, **characterized in that** during assembly of said threaded rod (2) and of said threaded element (4), there is a play between said flanks (f1, f2) of said first thread (3) and the flanks (F1, F2) of said second thread (5) due to the asymmetric shape of said second thread (5) of said threaded element (4), allowing a quick and effortless screwing up to the locking of said threaded rod (2) in said threaded element (4).

12. Method for mounting a self-locking fastener system according to claims 1 to 9, **characterized in that** the tensile force applied during the screwing causes the self-centering of said rod (2) by contacting the edge (6) of said rod (2) with the flanks (F2) of said thread (5) of said threaded element (4) and generates a tangential and continuous contact over the entire length of the thread (3) of said rod (2) until it locks, thus allowing the tensile force to be distributed along said thread (3) of said threaded rod (2).

13. Threaded element (4) comprising a thread (5),
**characterized in that**:
the nominal diameter of said thread (5) is less than 1.5 mm;
said thread (5) comprises a longitudinal section having a pitch of asymmetric profile (P2) composed of a first flank (F1) forming an angle of between 50 degrees and 70 degrees with respect to the longitudinal axis of said threaded element (4), a second flank (F2) that is asymmetrical to said first flank (F1) and forming an angle comprised between -20 degrees and -40 degrees with respect to the longitudinal axis of said threaded element (4), and of a first portion (T1) parallel to the longitudinal axis of said threaded element (4)
**in that** the asymmetric profile (P2) of the pitch of said thread (5) of the threaded element (4) further comprises a second portion (T2) parallel to the longitudinal axis of said element (4) of dimensions less than or equal to -15µm.

14. Threaded element (4) according to claim 13, **characterized in that** said second portion (T2) joins said flank (F1) and said flank (F2).

15. Method for manufacturing a threaded element (4)
**characterized in that** it consists in cutting a thread (5) whose longitudinal section has a pitch of asymmetric profile (P2) composed of a first flank (F1) forming an angle comprised between 50 degrees and 70 degrees relative to the longitudinal axis of said threaded element (4), a second flank (F2), asymmetrical to said first flank (F1) and forming an angle comprised between -20 degrees and -40 degrees with respect to the longitudinal axis of said threaded element (4), and of a first portion (T1) parallel to the longitudinal axis of said threaded element (4)
**in that** the asymmetric profile (P2) of the pitch of said thread (5) of the threaded element (4) further comprises a second portion (T2) parallel to the longitudinal axis of said element (4) of dimensions less than or equal to -15 µm.

16. Method according to claim 15, **characterized in that** said second portion (T2) joins said flank (F1) and said flank (F2).

17. Method according to one of claims 15 or 16, **characterized in that** said thread (5) is cut by milling.
